# EUROPEAN PATENT SPECIFICATION

(11) **EP 0 437 297 B1**
(45) Date of publication and mention of the grant of the patent: **15.07.1998**
(21) Application number: 91200035.3
(22) Date of filing: 10.01.1991
(51) Int. Cl.: C08L 63/00, C08L 51/00

(54) **Curing compositions**
Härtungszusammensetzungen
Compositions de durcissement

(30) Priority: 11.01.1990 GB 9000631
(43) Date of publication of application: 17.07.1991
(73) Proprietor: SHELL INTERNATIONALE RESEARCH MAATSCHAPPIJ B.V., 2596 HR Den Haag (NL)
(72) Inventor: Riviere, Jean André Alfred, B-1348 Ottignies Louvain-la-Neuve (BE); Fonze, Annie Bernardette Michèle Ghislaine, B-1348 Ottignies Louvain-la-Neuve (BE); Leroy, Alain Robert Louis Ghislain, B-1348 Ottignies Louvain-la-Neuve (BE); Walton, Gerard, B-1348 Ottignies Louvain-la-Neuve (BE)

(56) References cited:
- EP-A- 0 254 523
- EP-A- 0 292 771
- DE-A- 3 920 332
- US-A- 4 959 398

## Description

The invention relates to curing compositions obtainable by incorporating a curing agent into a reaction product of a glycidyl ether of a polyhydric phenol with a carboxy and/or anhydride functionalized hydrogenated monoalkenyl arene-conjugated diene block copolymer, to said reaction product and to a process for the preparation of said reaction product.

It is known in the art that the impact resistance of epoxy resin compositions is improved by a dispersion therein of elastomeric or thermoplastic particles, such as liquid amine - or carboxy terminated polybutadiene/acrylonitrile rubbers ( ATBN's or CTBN's). The polar nitrile groups of such low molecular weight rubbers enhance the compatibility of the elastomer with the epoxy resin but increase the moisture absorption of the cured system. Moreover a phase separation occurs upon curing and said cured systems show a lower glass transition temperature (Tg) than the cured epoxy resin compositions without reactive elastomers.

From Japanese patent application No. 63308027 a dispersion of moderate diameter particles of a hydrogenated, styrene-butadiene block copolymer, which has been optionally graft copolymerized with an alpha,beta unsaturated carboxylic acid, in a liquid polyepoxide is known.

The present invention aims at eliminating the negative effects inflicted by the addition of an elastomeric or thermoplastic compound upon the properties of the epoxy resin system, whilst retaining its advantageous aspects.

To this end the invention provides a curing composition, which when cured shows excellent properties in various applications such as in heat cure adhesives and in advanced composites for the aerospace industry.

Accordingly the present invention relates to a curing composition obtainable by incorporating
- a curing agent (1)
   into
- a reaction product (2) of:
   i) at least one glycidyl ether of a polyhydric phenol A, and
   ii) at least one functionalized selectively hydrogenated block copolymer B to which has been grafted carboxy and/or anhydride functional groups, said functionalized block copolymer comprising
- at least one polymer block C, said C block being predominantly alkenyl arene block, and
- at least one selectively hydrogenated conjugated diene polymer block D, wherein
- the C blocks constitute between 2 and 60 per cent,
- the unsaturation of the D blocks is less than 10 per cent of the original unsaturation of the D blocks and
- the unsaturation of the C blocks is greater than 50 per cent of the original unsaturation of the C blocks, characterized in that the hydrogenated block copolymer B has been grafted with an effective amount of carboxy and/or anhydride functional groups of from ten carboxy and/or anhydride functional groups per molecule of said copolymer and that the final reaction product (2) is essentially free from carboxy and/or anhydride groups.
Such curing compositions were found to show excellent properties in various applications.

When used in adhesive compositions excellent adhesive properties even under hot and wet conditions were recorded, whilst the elastomeric compound B did not have a negative influence on the Tg. Moreover advanced composite formulations for use in the aerospace industry, comprising the curing composition of the invention showed an excellent balance between the fracture toughness and the Tg.

The reaction product (2) is essentially free from carboxy and/or anhydride groups, which should be interpreted in such a way that when performing a Fourrier Transformed Infra Red analysis of (2) no significant absorption peak is observed at frequencies of from 1705 to 1715 cm⁻¹, where the carboxy carbonyl groups absorb, nor at frequencies of from 1775 to 1765 cm⁻¹ where the anhydride carbonyl groups absorb.

Preferred block copolymers B are those wherein
a) each of the C blocks prior to hydrogenation is predominantly a polymerized monoalkenylarene block having an average molecular weight of from 1,000 to 125,000, preferably of from 1,000 to 60,000,
b) each of the D blocks prior to hydrogenation is predominantly a polymerized conjugated diene block having an average molecular weight of from 10,000 to 450,000, preferably of from 10,000 to 150,000,
c) the C blocks constitute between 2 and 40 per cent by weight of the copolymer,
d) the unsaturation of the D blocks is less than 5 per cent and preferably at most 2 per cent of the original unsaturation of the D blocks, and
e) the unsaturation of the C blocks is greater than 50 per cent of the original unsaturation of the C blocks.

Particularly preferred block copolymers B have an effective amount of carboxy and/or anhydride functional groups of at least ten carboxy and/or anhydride functional groups per molecule of said copolymer.

Particularly suitable block copolymers B were found to be maleic anhydride functionalized triblock copolymers having, prior to hydrogenation, a polybutadiene mid block and polystyrene end blocks.

Suitable glycidylethers of polyhydric phenols A may be substituted with non interfering substituents such as halogen atoms and ether radicals and may be liquid at ambient temperature, though semi-solid - and mixtures of solid and liquid glycidyl ethers of polyhydric phenols may also be employed.

Particularly suitable glycidylethers of polyhydric phenols are the (di)glycidyl (poly)ethers of 2,2-bis(4-hydroxyphenyl)propane (bisphenol A or BPA) and 2,2-bis(4-hydroxyphenyl)methane, more in particular those having an epoxy group content (EGC) of from 450 to 7500 mmol/kg, polyepoxides in this class are known commercial products. Examples of suitable commercially available diglycidyl ethers of bisphenol-A are EPIKOTE 828 (registered trade mark) a liquid compound having an EGC of from 5150 to 5490 mmol/kg and EPIKOTE 1007 (registered trademark) a solid compound having an EGC of from 500 to 645 mmol/kg.

The curing agent (1) of the curing compositions of the invention may be any conventional epoxide curing agent such as those mentioned in European patent application No. 77096 and in addition the amino containing compounds: diaminodiphenylmethane, isophoronediamine, alpha,alpha'-bis(4-aminophenyl)-p-diisopropenylbenzene, alpha,alpha'-bis(3,5-dimethyl-4-aminophenyl)-p-diisopropenylbenzene.

It will be appreciated that the curing compositions of the invention are prepared by first producing the reaction product (2) whereafter the curing agent (1) is added to (2) diethyltoluenediamine, dithiomethyltoluenediamine and diaminodiphenylsulphone.

The curing composition of the invention may in addition comprise an amount of another thermosetting resin. The weight ratio of the curing composition and this thermosetting resin may vary from 1:99 to 99:1. Examples of said thermosetting resins are epoxy or bismaleimide resins, preferred thermosetting resins are epoxy resins, which may be the same or different from the ones used in the curing composition.

Those skilled in the art will appreciate that curing temperatures and curing times for the curing compositions of the invention will depend on the nature of the components contained therein.

Suitable curing temperatures range from room temperature to 250 °C.

Furthermore conventional additives may be added to the curing compositions of the invention, such as inert solvents, diluents, accelerators, antioxidants, fillers, fibrous materials, dyes, extenders and thixotropics.

The invention also provides a process for the preparation of (2) as defined above, by reacting a glycidylether of a polyhydric phenol A with a block copolymer B in the presence of an esterification catalyst.

In this process any suitable esterification catalyst known in the art can be employed. Very suitable catalysts include the metal hydroxides and alcoholates; tin and chromium salts; phosphines; and the onium salts, such as the phosphonium salts, including the phosphonium and ammonium halides. Preferred catalysts to be utilized in the process comprise the stannous compounds, chromium compounds and the onium salts, preferably those onium salts containing phosphorus, sulphur or nitrogen. Examples of suitable stannous compounds are stannous oxide, stannous hydroxide or a stannous salt of a mono carboxylic acid e.g stannous stearate, palmitate, laurate and 2-ethylhexoate (also known as stannous octoate). Examples of suitable onium salts are benzyltrimethylammonium sulphate, tetramethylammonium chloride, benzyltrimethylammonium nitrate, diphenyldimethylammonium chloride, benzyltrimethylammonium chloride, diphenyldimethylammonium nitrate, diphenylmethylsulphonium chloride, tricyclohexylsulphonium bromide, triphenylmethylphosphonium iodide, diethyldibutylphosphonium nitrate, trimethylsulphonium chloride and benzyltrimethylammonium thiocyanate.

The esterification catalysts are preferably used in amounts from 0.1 to 2.0 % w of reactants A and B.

Any one of the block copolymers B and of glycidylethers of polyhydric phenols A as mentioned hereinbefore can be suitably used in the process of the present invention.

Amounts of compounds A and B used in the preparation of the prereacted composition should be such that at the end of the reaction essentially no free carboxy or anhydride groups remain in the composition. Therefore B is reacted with a stoichiometrical excess of A. In practice this often relates to a weight ratio of A and B in the reaction mixture of from 99:1 to 50:50, preferably of from 95:5 to 75:25.

The reaction between A and B may be conducted in the presence or absence of inert solvents or diluents. This will generally depend on the physical state of components A and B, so if either or both reactants are solids or viscous liquids it may be desirable to add inert solvents or diluents to assist in effecting the reaction. Examples of suitable solvents or diluents are dichloromethane (DCM), tetrahydrofuran (THF), toluene, xylene, styrene and divinylbenzene; DCM and toluene being particularly preferred ones. When solvents or diluents are used in the reaction the solvent or diluent may be retained in or removed from the reaction mixture, whatever is more desirable. Removal of the solvent or diluent can be done by any suitable method such as by distillation. If the composition is not to be used for some time after its formation it may also be desirable to remove the esterification catalyst, e.g. by stripping.

The temperature at which the reaction between A and B preferably is conducted ranges from 20°C to 150 °C, particularly preferred temperatures range from 40 °C to 125 °C.

The reaction will preferably be conducted at atmospheric pressure but in some cases it may be advantageous to employ superatmospheric or subatmospheric pressures. If desired the reaction can be performed in the presence of an inert gas such as nitrogen.

The invention will be further understood from the following examples in which parts and percentages are by weight unless otherwise indicated, and various terms are defined below.

KRATON FG 1901 (registered trademark) is a maleic acid anhydride functionalized selectively hydrogenated styrene-butadiene-styrene triblock copolymer, containing 29 % by weight of polystyrene sequences and 1.8 % by weight of the maleic acid anhydride functional groups.

EPIKOTE 828 (registered trademark) is a liquid unmodified bisphenol A-epichlorohydrin epoxide resin of medium viscosity having an EGC of from 5150 to 5490 mmol/kg.

EPIKOTE 1007 (registered trademark) is a solid bisphenol A epoxide resin of medium high molecular weight and softening point having an EGC of from 500 to 645 mmol/kg.

EPIKOTE 834 (registered trademark) is unmodified bisphenol A-epichlorohydrin resin of high viscosity at room temperature, having an EGC of from 3570 to 4440 mmol/kg.

EPIKOTE 862 (registered trademark) is a liquid bisphenol F-epichlorohydrin resin of medium viscosity having an EGC from 5650 to 6000.

DCM stands for dichloromethane.

Ethacure 100 is a tradename for a commercial diethyltoluenediamine containing curing agent.

Ethacure 300 is a tradename for a commercial dithiomethyldiaminotoluene containing curing agent.

Epikure DX 191 (registered trademark) is accelerated dicyandiamide with Epikure P1.

Epikure P1 (registered trademark) is an adduct of EPIKOTE 828 and 2-methyl imidazole.

Epikure 1062 (registered trademark) is an alpha,alpha'-bis(3,5-dimethyl-4-aminophenyl)-p-diisopropenylbenzene containing curing agent.

AMC2 is a tradename for a catalyst comprising chromium octoate and amine.

Aerosil R805 is a tradename for a fumed silica thixothropic agent.

Wollastonite is a tradename for a calcium silicate filler. Viscosity measurements were performed according to the ICI cone and plate method at 100 °C.

The Epoxy Group Content (EGC) was determined by perchloric titration.

The Lap Joint Shear Strenght (LJSS) was determined according to ASTM D1002-72.

The T-peel strength was determined according to ASTM D1876-72. The glass transition temperature (Tg) was measured on a Perkin Elmer DSC series 7 instrument as a scanning rate between 5 and 20 °C per minute.

The fracture toughness (G_{IC}) was determined employing a double cantilever beam specimen according to the method 1 described in NASA RF 1092.

Fourrier Tansformed Infra Red (FTIR) analysis was carried out with a Nicolet 20SXC apparatus. The samples were applied onto a KBr plate. The spectra were taken between 4000 cm⁻¹ and 400 cm⁻¹ and analyzed between 2000 cm⁻¹ and 1650 cm⁻¹, where the symmetric stretching of the carbonyl group occurs.

In morphological studies the microscope used was an Olympus Vanox-S.

High shear mixing was performed with an ULTRA TURAX T50 with mixing head G45 G at a speed of 6000 rpm.

Extrusion was performed on a Buss RT46 extruder at a speed of 45 rpm.

### EXAMPLE 1

Fourrier Transformed Infra Red (FTIR) analysis of reaction products of EPIKOTE 828 and KRATON FG1901.

The reaction product of KRATON FG1901 and EPIKOTE 828 obtained in the presence and in the absence of a catalyst was studied by Fourrier Transformed Infra Red Spectroscopy.

KRATON FG 1901 contains on its backbone carboxy- and/or anhydride functional groups which may react with the epoxy - and/or hydroxy groups of EPIKOTE 828. FTIR analysis is a useful technique to study this type of reaction since herewith the wave number of absorbtion of the symmetric stretching of the carbonyl groups can be determined.

The anhydride carbonyl group absorbs at frequencies of from 1775 to 1765 cm⁻¹, the carbonyl ester group (formed by the reaction of a carboxy group of KRATON FG 1901 with an epoxy - or hydroxy group of EPIKOTE 828) absorbs at frequencies of from 1735 to 1725 cm⁻¹ and the carboxy carbonyl group absorbs at frequencies of from 1715 to 1705 cm⁻¹.

Mixtures A to D as shown in table 1 were reacted as follows.

KRATON FG 1901 was dissolved in a solvent under reflux whereafter EPIKOTE 828 and optionally AMC2 as catalyst were added and the resulting mixture was allowed to react while stirring under reflux for 3 hours until the reaction was complete. The solvent was distilled off and the resin was further stabilized for 30 minutes at 150 °C.

Reactions in toluene were carried out at 140 °C and reactions in DCM were carried out at 50 °C.

**TABLE 1**

| | KRATON FG1901 | EPIKOTE 828 | AMC2 | SOLVENT |
|---|---|---|---|---|
| A | 20 ppw | 100 ppw | 1 ppw | 100 ppw toluene |
| B | 20 ppw | 100 ppw | 0 ppw | 100 ppw toluene |
| C | 20 ppw | 100 ppw | 1 ppw | 200 ppw DCM |
| D | 20 ppw | 100 ppw | 0 ppw | 200 ppw DCM |

During the reaction of the mixtures A to D FTIR traces were made of the reaction products formed in order to follow the reaction.

FTIR traces taken from reaction products during the reaction of mixtures B and D showed a relatively strong absorption at frequencies where anhydride carbonyl groups and carboxy carbonyl groups absorb and a very minor absorption at frequencies where carbonyl ester groups absorb, these observations suggest that when an esterification catalyst is not present in the reaction mixture only a minor amount of the carboxy- and/or anhydride groups present on the KRATON FG1901 backbone will react with the epoxy- or hydroxy groups of the EPIKOTE 828 compound.

However FTIR traces of reaction products formed during the reaction of mixture A and C showed a fast disappearance of absorption at frequencies where the anhydride carbonyl and the carboxy carbonyl groups absorb and an increasing and finally dominating absorption at frequencies where carbonyl ester groups absorb. These observations suggest that in the presence of an esterification catalyst in the above reaction mixtures, the initially present carboxy - or anhydride groups on the KRATON FG1901 backbone disappear as a result of a fast and selective reaction with the epoxy and/or hydroxy groups of the EPIKOTE 828 compound thereby forming carbonyl ester bonds.

The FTIR analysis in addition suggested a similar selectivity of the above reactions in reaction mixtures A and C.

### EXAMPLE 2

Influence of processing technique of Epoxy resin-KRATON blends on the morphology of the blends.
a) A reaction product (2) according to the present invention was prepared essentially as described in example 1 using 11 ppw of KRATON FG1901, 100 ppw of EPIKOTE 828, and 1 ppw AMC2 in 120 ppw DCM at 50 °C.
   The resulting product, coded "X", consisted of a viscous paste having a green colour, a viscosity of 960 mPa.s and an EGC of 4000 mmol/kg.
b) An EPIKOTE 828-KRATON FG 1901 high shear blend was prepared as follows:
   100 ppw of preheated EPIKOTE 828 was added to 11 ppw of KRATON FG 1901. The compounds were mixed at a temperature of 150 °C until a homogeneous blend was obtained, while mixing an increase in temperature of 30 °C was observed. Upon cooling a white solid was obtained which was milled to obtain a white powder.
c) 75 ppw of EPIKOTE 1007 was extruded in the presence of 25 ppw KRATON FG 1901 in two passes with the barrel temperature of 110 °C. A white homogeneous solid resin was obtained which was ground and milled to form a white powder.

FTIR traces were made from the products obtained in a), b) and c). An FTIR trace of the product formed in b) showed relatively strong absorption at frequencies where the anhydride carbonyl group absorb. An FTIR trace of the product formed in c) showed a dominating absorption at frequencies where the carboxy carbonyl groups absorb. An FTIR trace of the product formed in a) showed a dominating absorption at frequencies where the carbonyl ester groups absorb.

These results suggest that an effective reaction between the carboxy - or anhydride groups of KRATON FG1901 and the epoxy - or hydroxy groups of an EPIKOTE compound can not be obtained, neither by applying hear shear conditions to - nor by extrusion of KRATON FG 1901 with an EPIKOTE compound.

Curing compositions of the products obtained in a) and c) were prepared and cured as follows.
d) 20 ppw of the white powder prepared in c) was blended with 100 ppw EPIKOTE 828 at 120 °C and cured with a stoichiometrical amount of Ethacure 100 for 2 hours at 150 °C and for 2 hours at 180 °C. The cured product was opaque.
e) 50 ppw of the viscous paste "X" prepared in a) was blended with 50 ppw EPIKOTE 828 at 120 °C. A clear solution was obtained. The system was cured with stoichiometrical amount of Ethacure 100 for 2 hours at 150 °C and for 2 hours at 180 °C. The cured product was quasi transparant.

Morphological studies of the cured compositions were performed. The cured product obtained in d) showed copolymer domains of different sizes, some higher than 10 microns. In the cured product obtained in e) no domains appeared clearly. These studies learn that the shape of the copolymer domains depends on the technique used for producing the modified resin.
Possibly the covalent incorporation of KRATON FG1901 into the epoxy network (by means of carbonyl ester linkages) as in "X" used in route e), positively influences the homogeneity of the cured product.

### EXAMPLE 3

Preparation of one pack heat cure adhesive formulations a) One pack heat cure adhesive formulations (systems 1 to 5 in table 2) were prepared as follows.

100 ppw of an epoxy resin composition, 8 ppw of Epikure DX 191 and 5 ppw of Aerosil R805 were dispersed by sawtooth stirring and triple milling. The formulations were degassed under vacuum at 60 °C before application on the substrate (steel Euronorm, FE360). The glueline thickness was adjusted to 0.2 mm and the specimens were cured for 30 min at 180 °C.

Systems 3 and 5 comprise curing compositions according to the invention whereof reaction product (2) was prepared as in accordance with route a) of example 2.

Systems 2 and 4 are comparative systems comprising instead of reaction product (2) the same non reacted epoxy compound as used in systems 3 and 5 respectively.

System 1 is a commercially available adhesive formulation not containing a prereacted composition according to the invention and serves for comparative purposes.

Properties of the adhesive formulations of systems 1 to 5 are presented in table 2.

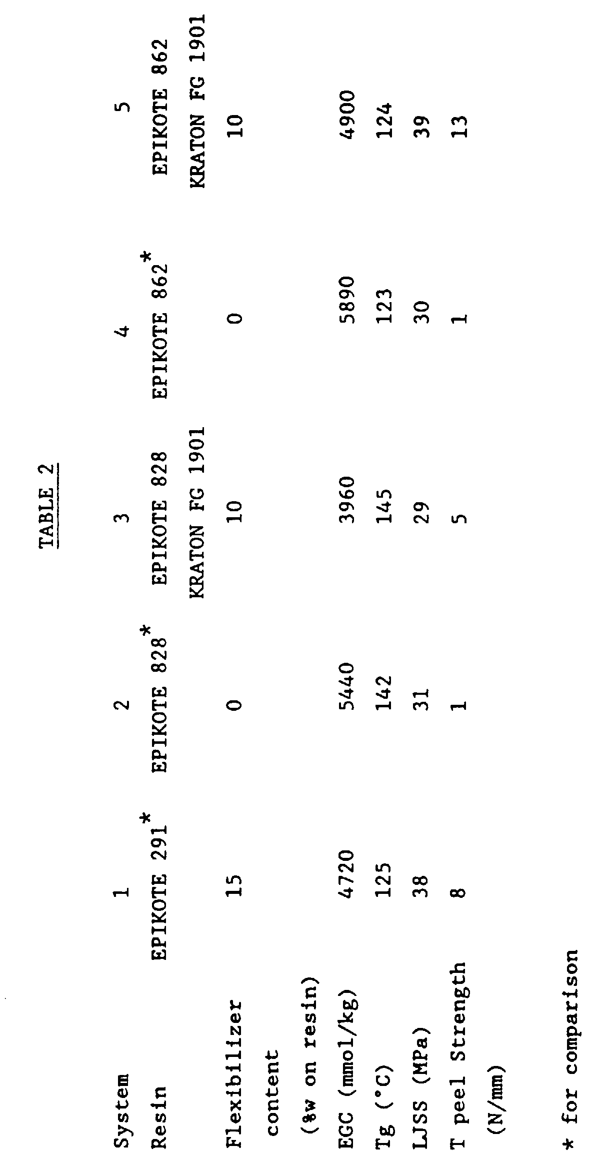

Table 2 shows that adhesive systems comprising a reaction product (2) of an epoxy resin and KRATON FG1901, as is the case in curing compositions of the invention, have a significantly improved T peel strength over adhesive systems comprising epoxy resin only, while the Tg value is retained, which indicates that the inclusion of KRATON FG 1901 has no (negative) plasticizing effect.
b) Systems 1 and 5 were compared in a durability test to evaluate their behaviour under wet conditions. For this purpose 50 % w, based on the resin in the system, of Wollastonite as a filler was added to both systems. The formulations thus obtained were studied on a galvanized steel substrate used by the automotive industry: "Monogal".

The results are shown in table 3.

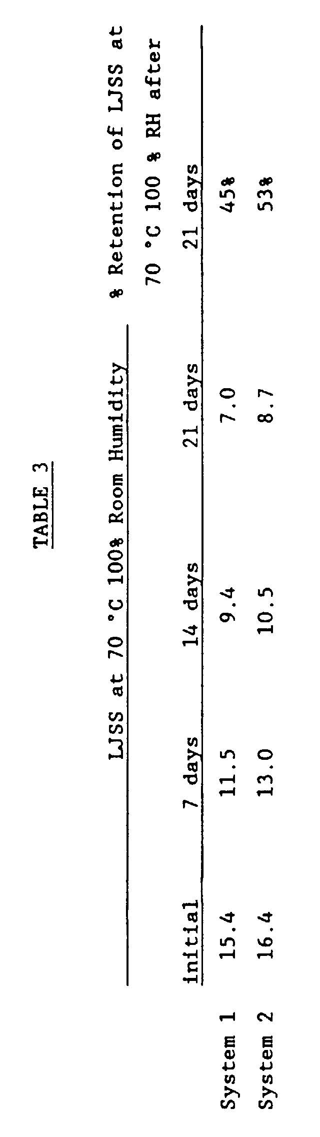

From table 3 it can be derived that system 5 has higher initial and final LJSS values and also shows a better retention of its adhesive strength than system 1.

### EXAMPLE 4

Prepregs for aerospace applications having improved fracture toughness.

Formation of a carbon fibre laminate comprising a curing composition of the invention
a) 100 ppw of EPIKOTE 862 was reacted with 20 ppw of KRATON FG 1901 in toluene at 85 °C for 2 hours in the presence of 1 ppw AMC 2 as a catalyst. After evaporation of the solvent, an FTIR trace was taken from the formed composition, coded "Y", which showed no significant absorption of carboxy carbonyl groups.
b) 138 ppw of "Y" was heated to 80 °C prior to the addition of 236 ppw EPIKOTE 1079 and 20 ppw of EPIKOTE 834. The mixture was stirred for 15 minutes with a high speed stirrer. The obtained resin, coded "Z", had a viscosity at 100 °C of 1200 mPas.
c) 100 ppw of "Z" was heated to 50 °C and mixed with 28 ppw of a liquid curing agent consisting of a blend of Ethacure 300 and Epikure 1062 in a 2:1 weight ratio. The final mixture, coded "U", had a vicosity at 100 °C of 700 mPas. At room temperature "U" is a semi solid tacky mixture which is stable for at least 5 days.
d) a carbon fibre prepreg was produced containing 39 % by weight of "U" on a California Graphite machine operating at a speed of 1.5 m/min with a casting blade temperature of 55 °C. The carbon fibre used was the fibre XAS HSII from Courtaulds.
e) 24 plies of prepregs were cured unidirectionally in a vacuum bag in a press according to the following cure cycle: 1 hour at 150 °c plus 1 hour at 170 °C and 2.5 hours at 200 °C.

Properties of the formed laminate

| | |
|---|---|
| Fracture toughness (G_{IC}) | 450 J/m² |
| T_{g} | 203 °C |

When comparing these values with typical values of G_{IC} for commercially available carbon fibre epoxy laminates as presented in Fig.14 on page 308 of "COMPOSITES", volume 19 No.4, July 1988, it can be seen that the prepregs made with "U", comprising a composition of the present invention possess a higher fracture toughness than the commercially presented systems.

## Claims (Claims for the following Contracting State(s): BE, CH, LI, DE, DK, FR, GB, IT, NL, SE)

1. A curing composition obtainable by incorporating
- a curing agent (1)
into
- a reaction product (2) of
i) at least one glycidylether of a polyhydric phenol A, and
ii) at least one functionalized selectively hydrogenated block copolymer B, to which has been grafted carboxy and/or anhydride functional groups, said functionalized block copolymer comprising
- at least one polymer block C, said C block being predominantly alkenyl arene block, and
- at least one selectively hydrogenated conjugated diene polymer block D, wherein
- the C blocks constitute between 2 and 60 per cent,
- the unsaturation of the D blocks is less than 10 per cent of the original unsaturation of the D blocks and
- the unsaturation of the C blocks is greater than 50 per cent of the original unsaturation of the C blocks, characterized in that the hydrogenated block copolymer B has been grafted with an effective amount of carboxy and/or anhydride functional groups of from ten carboxy and/or anhydride functional groups per molecule of said copolymer and that the final reaction product (2) is essentially free from carboxy and/or anhydride groups.

2. A curing composition as claimed in claim 1 wherein compound B is a maleic anhydride functionalized triblock copolymer having, prior to hydrogenation, a polybutadiene mid block and polystyrene end blocks.

3. A curing composition as claimed in claims 1 and 2, wherein compound A is the diglycidyl ether - or a diglycidyl polyether of 2,2-bis(4-hydroxyphenyl)propane.

4. A curing composition as claimed in claim 3 wherein A has an Epoxy Group Equivalent of from 450 to 7500 mmol/kg.

5. A curing composition as claimed in any one of the claims 1 to 4 comprising a curing agent selected from the group consisting of alpha,alpha'-bis(3,5-dimethyl-4-aminophenyl)-p-diisopropenyl benzene, diethyltoluenediamine and dithiomethyltoluenediamine.

6. A curing composition as claimed in any one of the claims 1 to 5 comprising in addition a thermosetting resin.

7. A curing composition as claimed in claim 6 wherein the thermosetting resin is a polyepoxide.

8. A curing composition as claimed in claim 7 wherein the polyepoxide is a glycidyl polyether of 2,2-bis(4-hydroxyphenyl)propane.

9. An adhesive compound or a prepreg comprising a curing composition as claimed in any one of the claims 1 to 8.

## Claims (Claims for the following Contracting State(s): ES)

1. A process for preparation of a curing composition, comprising the incorporation of
- a curing agent (1)
into
- a reaction product (2) of
i) at least one glycidylether of a polyhydric phenol A, and
ii) at least one functionalized selectively hydrogenated block copolymer B, to which has been grafted carboxy and/or anhydride functional groups, said functionalized block copolymer comprising
- at least one polymer block C, said C block being predominantly alkenyl arene block, and
- at least one selectively hydrogenated conjugated diene polymer block D, wherein
- the C blocks constitute between 2 and 60 per cent,
- the unsaturation of the D blocks is less than 10 per cent of the original unsaturation of the D blocks and
- the unsaturation of the C blocks is greater than 50 per cent of the original unsaturation of the C blocks, characterized in that the hydrogenated block copolymer B has been grafted with an effective amount of carboxy and/or anhydride functional groups of from ten carboxy and/or anhydride functional groups per molecule of said copolymer and that the final reaction product (2) is essentially free from carboxy and/or anhydride groups.

2. A process as claimed in claim 1 wherein compound B is a maleic anhydride functionalized triblock copolymer having, prior to hydrogenation, a polybutadiene mid block and polystyrene end blocks.

3. A process as claimed in claims 1 and 2, wherein compound A is the diglycidyl ether - or a diglycidyl polyether of 2,2-bis(4-hydroxyphenyl)propane.

4. A process as claimed in claim 3 wherein A has an Epoxy Group Equivalent of from 450 to 7500 mmol/kg.

5. A process as claimed in any one of the claims 1 to 4 comprising a curing agent selected from the group consisting of alpha,alpha'-bis(3,5-dimethyl-4-aminophenyl)-p-diisopropenyl benzene, diethyltoluenediamine and dithiomethyltoluenediamine.

6. A process as claimed in any one of the claims 1 to 5 comprising the additional incorporation of a thermosetting resin.

7. A process as claimed in claim 6 wherein the thermosetting resin is a polyepoxide.

8. A process as claimed in claim 7 wherein the polyepoxide is a glycidyl polyether of 2,2-bis(4-hydroxyphenyl)propane.

9. A process for the preparation of an adhesive compound or a prepreg, characterized in that a curing composition as obtained according to any one of the claims 1 to 8, is applied.

## Patentansprüche (Patentansprüche für folgende(n) Vertragsstaat(en): BE, CH, LI, DE, DK, FR, GB, IT, NL, SE)

1. Härtungszusammensetzung, erhältlich durch Einbringen
- eines Härtungsmittels (1)
in
- ein Reaktionsprodukt (2) aus:
i) wenigstens einem Glycidylether eines mehrwertigen Phenols A und
ii) wenigstens einem funktionalisierten selektiv hydrierten Blockcopolymer B, auf das funktionelle Carboxy- und/oder Anhydridgruppen aufgepfropft worden sind, welches funktionalisierte Blockcopolymer
- wenigstens einen Polymerblock C, welcher Block C vorwiegend ein Alkenylarenblock ist, und
- wenigstens einen selektiv hydrierten konjugierten Dien-Polymerblock D umfaßt, worin
- die Blöcke C zwischen 2 und 60 % ausmachen,
- die Unsättigung der Blöcke D weniger als 10 % der ursprünglichen Unsättigung der Blöcke D ausmacht und
- die Unsättigung der Blöcke C mehr als 50 % der ursprünglichen Unsättigung der Blöcke C ausmacht,
dadurch gekennzeichnet, daß das hydrierte Blockcopolymer B mit einer wirksamen Menge an funktionellen Carboxy- und/oder Anhydridgruppen von 10 funktionellen Carboxy- und/oder Anhydridgruppen je Molekül dieses Copolymers gepfropft worden ist und daß das Endreaktionsprodukt (2) im wesentlichen frei von Carboxy- und/oder Anhydridgruppen ist.

2. Härtungszusammensetzung nach Anspruch 1, worin die Verbindung B ein mit Maleinsäureanhydrid funktionalisiertes Dreiblockcopolymer ist, das vor der Hydrierung einen Polybutadienmittelblock und Polystyrolendblöcke aufweist.

3. Härtungszusammensetzung nach den Ansprüchen 1 und 2, worin die Verbindung A der Diglycidylether oder ein Diglycidylpolyether von 2,2-Bis(4-hydroxyphenyl)propan ist.

4. Härtungszusammensetzung nach Anspruch 3, worin A ein Epoxygruppenäquivalent von 450 bis 7500 mMol/kg hat.

5. Härtungszusammensetzung nach einem der Ansprüche 1 bis 4, umfassend ein Härtungsmittel, ausgewählt aus der aus alpha, alpha'-Bis(3,5-dimethyl-4-aminophenyl)-p-diisopropenylbenzol, Diethyltoluoldiamin und Dithiomethyltoluoldiamin bestehenden Gruppe.

6. Härtungszusammensetzung nach einem der Ansprüche 1 bis 5, die zusätzlich ein Hitze-härtbares Harz umfaßt.

7. Härtungszusammensetzung nach Anspruch 6, worin das Hitze-härtbare Harz ein Polyepoxid ist.

8. Härtungszusammensetzung nach Anspruch 7, worin das Polyepoxid ein Glycidylpolyether von 2,2-Bis(4-hydroxyphenyl)propan ist.

9. Klebstoffmasse oder Prepreg, umfassend eine Härtungszusammensetzung nach einem der Ansprüche 1 bis 8.

## Patentansprüche (Patentansprüche für folgende(n) Vertragsstaat(en): ES)

1. Verfahren zur Herstellung einer Härtungszusammensetzung, umfassend das Einverleiben
- eines Härtungsmittels (1)
in
- ein Reaktionsprodukt (2) aus
i) wenigstens einem Glycidylether eines mehrwertigen Phenols A und
ii) wenigstens einem funktionalisierten selektiv hydrierten Blockcopolymer B, auf das funktionelle Carboxy- und/oder Anhydridgruppen aufgepfropft worden sind, welches funktionalisierte Blockcopolymer
- wenigstens einen Polymerblock C, welcher Block C vorwiegend ein Alkenylarenblock ist, und
- wenigstens einen selektiv hydrierten konjugierten Dien-Polymerblock D umfaßt, worin
- die Blöcke C zwischen 2 und 60 % ausmachen,
- die Unsättigung der Blöcke D weniger als 10 % der ursprünglichen Unsättigung der Blöcke D ausmacht und
- die Unsättigung der Blöcke C mehr als 50 % der ursprünglichen Unsättigung der Blöcke C ausmacht,
dadurch gekennzeichnet, daß das hydrierte Blockcopolymer B mit einer wirksamen Menge an funktionellen Carboxy- und/oder Anhydridgruppen von 10 funktionellen Carboxy- und/oder Anhydridgruppen je Molekül dieses Copolymers gepfropft worden ist und daß das Endreaktionsprodukt (2) im wesentlichen frei von Carboxy- und/oder Anhydridgruppen ist.

2. Verfahren nach Anspruch 1, worin die Verbindung B ein mit Maleinsäureanhydrid funktionalisiertes Dreiblockcopolymer ist, das vor der Hydrierung einen Polybutadienmittelblock und Polystyrolendblöcke aufweist.

3. Verfahren nach den Ansprüchen 1 und 2, worin die Verbindung A der Diglycidylether oder ein Diglycidylpolyether von 2,2-Bis(4-hydroxyphenyl)propan ist.

4. Verfahren nach Anspruch 3, worin A ein Epoxygruppenäquivalent von 450 bis 7500 mMol/kg hat.

5. Verfahren nach einem der Ansprüche 1 bis 4, umfassend ein Härtungsmittel, ausgewählt aus der aus alpha,alpha'-Bis (3,5-dimethyl-4-aminophenyl)-p-diisopropenylbenzol, Diethyltoluoldiamin und Dithiomethyltoluoldiamin bestehenden Gruppe.

6. Verfahren nach einem der Ansprüche 1 bis 5, umfassend das zusätzliche Einverleiben eines Hitze-härtbaren Harzes .

7. Verfahren nach Anspruch 6, worin das Hitze-härtbare Harz ein Polyepoxid ist.

8. Verfahren nach Anspruch 7, worin das Polyepoxid ein Glycidylpolyether von 2,2-Bis(4-hydroxyphenyl)propan ist.

9. Verfahren zur Herstellung einer Klebstoffmasse oder eines Prepregs, dadurch gekennzeichnet, daß eine Härtungszusammensetzung, wie nach einem der Ansprüche 1 bis 8 erhalten, angewendet wird.

## Revendications (Revendications pour l'(les) Etat(s) contractant(s) suivant(s): BE, CH, LI, DE, DK, FR, GB, IT, NL, SE)

1. Composition de durcissement, que l'on peut obtenir par l'incorporation
- d'un agent de durcissement (1)
dans
- le produit de la réaction (2) de :
i) au moins un éther glycidylique d'un phénol polyhydroxylé A, et
ii) au moins un copolymère B séquencé, sélectivement hydrogéné, fonctionnalisé, auquel ont été greffés des groupes fonctionnels carboxyle et/ou anhydride, ledit copolymère séquencé fonctionnalisé comprenant
- au moins une séquence de polymère C, ladite séquence C étant en prédominance une séquence d'alcénylarène, et
- au moins une séquence de polymère d'un diène conjugué, sélectivement hydrogénée D, où
- les séquences C constituent entre 2 et 60%,
- l'insaturation des séquences D est inférieure à 10% de l'insaturation d'origine des séquences D, et
- l'insaturation des séquences C est supérieure à 50% de l'insaturation d'origine des séquences C, qui se caractérise en ce que le copolymère séquencé hydrogéné B a été greffé avec une quantité efficace de groupes fonctionnels carboxyle et/ou anhydride à partir de dix groupes fonctionnels carboxyle et/ou anhydride par molécule dudit copolymère et en ce que le produit de réaction final (2) est sensiblement dépourvu de groupes carboxyle et/ou anhydride.

2. Composition de durcissement suivant la revendication 1, caractérisée en ce que le composé B est un copolymère triséquencé fonctionnalisé à l'anhydride de l'acide maléique, possédant, avant l'hydrogénation, une séquence médiane de polybutadiène et des séquences terminales de polystyrène.

3. Composition de durcissement suivant les revendications 1 et 2, caractérisée en ce que le composé A est l'éther diglycidylique ou un polyéther diglycidylique du 2,2-bis-(4-hydroxyphényl)propane.

4. Composition de durcissement suivant la revendication 3, caractérisée en ce que A possède un équivalent de radicaux époxy de 450 à 7500 mmoles/kg.

5. Composition de durcissement suivant l'une quelconque des revendications 1 à 4, comprenant un agent de durcissement choisi dans le groupe formé par les composés qui suivent : alpha,alpha'-bis(3,5-diméthyl-4-aminophényl)-p-diisopropénylbenzène, diéthyltoluèneamine et dithiométhyltoluènediamine.

6. Composition de durcissement suivant l'une quelconque des revendications 1 à 5, comprenant en plus une résine thermodurcissable.

7. Composition de durcissement suivant la revendication 6, caractérisée en ce que la résine thermodurcissable est un polyépoxyde.

8. Composition de durcissement suivant la revendication 7, caractérisée en ce que le polyépoxyde est un polyéther glycidylique du 2,2-bis-(4-hydroxyphényl)-propane.

9. Composé adhésif ou préimprégné comprenant une composition de durcissement suivant l'une quelconque des revendications 1 à 8.

## Revendications (Revendications pour l'(les) Etat(s) contractant(s) suivant(s): ES)

1. Procédé de préparation d'une composition de durcissement, comprenant l'incorporation
- d'un agent de durcissement (1)
dans
- le produit de la réaction (2) de :
i) au moins un éther glycidylique d'un phénol polyhydroxylé A, et
ii) au moins un copolymère B séquencé, sélectivement hydrogéné, fonctionnalisé, auquel ont été greffés des groupes fonctionnels carboxyle et/ou anhydride, ledit copolymère séquencé fonctionnalisé comprenant
- au moins une séquence de polymère C, ladite séquence C étant en prédominance une séquence d'alcénylarène, et
- au moins une séquence de polymère d'un diène conjugué, sélectivement hydrogénée D, où
- les séquences C constituent entre 2 et 60%,
- l'insaturation des séquences D est inférieure à 10% de l'insaturation d'origine des séquences D, et
- l'insaturation des séquences C est supérieure à 50% de l'insaturation d'origine des séquences C, qui se caractérise en ce que le copolymère séquencé hydrogéné B a été greffé avec une quantité efficace de groupes fonctionnels carboxyle et/ou anhydride à partir de dix groupes fonctionnels carboxyle et/ou anhydride par molécule dudit copolymère et en ce que le produit de réaction final (2) est sensiblement dépourvu de groupes carboxyle et/ou anhydride.

2. Procédé suivant la revendication 1, caractérisé en ce que le composé B est un copolymère triséquencé fonctionnalisé à l'anhydride de l'acide maléique, possédant, avant l'hydrogénation, une séquence médiane de polybutadiène et des séquences terminales de polystyrène.

3. Procédé suivant les revendications 1 et 2, caractérisé en ce que le composé A est l'éther diglycidylique - ou un polyéther diglycidylique du 2,2-bis-(4-hydroxyphényl)-propane.

4. Procédé suivant la revendication 3, caractérisé en ce que A possède un équivalent de radicaux époxy de 450 à 7500 mmoles/kg.

5. Procédé suivant l'une quelconque des revendications 1 à 4, comprenant un agent de durcissement choisi dans le groupe formé par les composés qui suivent: alpha,alpha'-bis-(3,5-diméthyl-4-aminophényl)p-diisopropénylbenzène, diéthyltoluèneamine et dithiométhyltoluènediamine.

6. Procédé suivant l'une quelconque des revendications 1 à 5, comprenant en plus une résine thermodurcissable.

7. Procédé suivant la revendication 6, caractérisé en ce que la résine thermodurcissable est un polyépoxyde.

8. Procédé suivant la revendication 7, caractérisé en ce que le polyépoxyde est un polyéther glycidylique du 2,2-bis-(4-hydroxyphényl)-propane.

9. Procédé de préparation d'un composé adhésif ou d'un préimprégné, caractérisé en ce que l'on applique une composition de durcissement telle qu'obtenue suivant l'une quelconque des revendications 1 à 8.
